# EUROPEAN PATENT SPECIFICATION

(11) **EP 3 558 694 B1**
(45) Date of publication and mention of the grant of the patent: **07.08.2024**
(21) Application number: 16826471.1
(22) Date of filing: 22.12.2016
(51) Int. Cl.: B60B 1/04, B60C 7/24

(54) **NON-PNEUMATIC WHEEL AND HUB**
LUFTLOSER REIFEN UND NABE
ROUE NON PNEUMATIQUE ET MOYEU

(43) Date of publication of application: 30.10.2019
(73) Proprietor: Compagnie Générale des Etablissements Michelin, 63000 Clermont-Ferrand (FR)
(72) Inventor: DELFINO, Antonio, Greenville, South Carolina 29605 (US); WALSER, Daniel, Greenville, South Carolina 29605 (US); BERGUERAND, Philippe, Greenville, South Carolina 29605 (US); SCHROETER, Pascal, Greenville, South Carolina 29605 (US); BAUMGARTNER, Gerard, Greenville, South Carolina 29605 (US)
(74) Representative: Casalonga
(86) International application number: PCT/IB2016/057953
(87) International publication number: WO 2018/115941

(56) References cited:
- US-A1- 2007 267 116
- US-A1- 2016 016 426

## Description

### FIELD OF THE INVENTION

The subject matter of the present disclosure relates generally to a non-pneumatic wheel and a hub for the non-pneumatic wheel.

### BACKGROUND OF THE INVENTION

Non-pneumatic wheel constructions and their benefits are described in e.g., U.S. Pat. Nos. 6,769,465; 6,994,134; 7,013,939; and 7,201,194.

Some non-pneumatic tire constructions propose incorporating an annular band, sometimes referred to as e.g.. a shear band, annular shear band, a band with a shear layer, or a compliant band. Embodiments of such are described in e.g., U.S. Pat. Nos. 6,769,465 and 7,201,194. Such non-pneumatic tires provide advantages in tire performance without relying upon a gas inflation pressure for support of the loads applied to the tire.

Document US2016016426A1 discloses a non-pneumatic wheel assembly with removable hub.

In one example of a non-pneumatic wheel, a compliant band with a ground contacting portion can be connected with a plurality of tension-transmitting, web-like elements (i.e. spokes) extending radially outward from a center element or hub. As such non-pneumatic wheel rolls over the ground surface, the tension-transmitting elements opposite the ground contacting portion of the wheel support the hub in tension. Specifically, the hub is suspended from the top of the wheel by the spokes instead of being primarily supported by compression of such elements located between the hub and the ground surface as is typical of e.g., solid wheel constructions where a hub is encircled by solid rubber or layers of rubber.

For certain constructions, such non-pneumatic wheel may be formed by open cast molding in which a polymeric material such as e.g., polyurethane is poured into a mold that forms all or part of the non-pneumatic tire. One or more inextensible reinforcement structures such as cords may be molded in place in the compliant band. Typically, in such prior constructions, the spokes and the hub are molded as an integral, single-piece construction. Alternatively, the spokes may be integrally joined by a band that is then joined with a hub or wheel center. In either construction, the spokes are not readily removable from either the radially-outer end attached with the compliant band or the radially-inner end attached to the hub or wheel center.

The construction and configuration of the spokes can affect the performance of the non-pneumatic wheel. Spokes constructed from different sizes, configurations, and materials of construction can affect the way tension is transmitted between the wheel hub and the compliant band, leading to differences in load carrying capabilities of the non-pneumatic wheel and perceived handling characteristics. The density of the spokes can also determine e.g., how much tension each spoke carries as it rotates to the top of the wheel during operation.

Because of e.g., the integral construction, prior non-pneumatic wheel constructions are not readily amenable to substituting different spokes into the non-pneumatic wheel, substituting differed hubs into the non-pneumatic wheel, or both. Such a substitution would require e.g., destructive steps to cut or extricate the spoke from the annular band of the non-pneumatic wheel. Additionally, because the spokes are joined or attached with the wheel hub, the substitution of different wheels hubs of different materials or configuration is not readily feasible for the same reason. Finally, prior manufacturing methods have not been conducive to incorporating reinforcements, shapes, layers of material, and other features into the construction of the spoke.

Accordingly, a hub for a non-pneumatic wheel that allows spokes to be removably attached to the hub would be useful. Such a hub that can be, in certain exemplary embodiments, be readily manufactured would be particularly beneficial. Such a hub that can be used for a variety of different wheel sizes would be also be useful. A non-pneumatic wheel incorporating such a hub would also be useful.

### SUMMARY OF THE INVENTION

According to the invention, a hub for a non-pneumatic wheel having a plurality of tension-transmitting spokes is provided. The hub defines axial, radial, and circumferential directions. The hub includes a central portion configured for supporting the wheel on a vehicle. An annular receiver is supported on the central portion and extends circumferentially around the central portion. The annular receiver includes a plurality of projections spaced apart from each other along the circumferential direction. Each projection has a longitudinal axis extending along the axial direction. A plurality of grooves are spaced apart from each other along the circumferential direction. Each groove is positioned between a pair of the plurality of projections. Each groove has a longitudinal axis extending along the axial direction. Each groove is configured for the receipt of at least one radially-inner end of one or more of spokes. The annular receiver comprises a single sheet of metal extending about the circumferential direction and forming the plurality of grooves and the plurality of projections.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an exemplary embodiment of a non-pneumatic wheel of the present invention.
FIG. 2 illustrates a side view of the exemplary embodiment of FIG. 1.
FIG. 3 is a perspective view of an exemplary tire of the present invention as may be used in the exemplary wheel of FIG. 1.
FIG. 4 is a perspective view of an exemplary wheel hub of the present invention.
FIG. 5 is a side view of the exemplary hub of FIG. 4.
FIG. 6 is an end view of the exemplary hub of FIGS. 4 and 5.
FIG. 7 is a close-up of an exemplary portion of the annular receiver of the hub in FIGS. 4, 5, and 6.
FIGS. 8 and 9 are perspective views of exemplary spokes (or tension-transmitting elements) of the present invention.
FIG. 10 is a view of an exemplary groove of the present invention as viewed along a radially inward direction depicted by lines 10-10 in FIG. 2.
The use of the same or similar reference numerals in the figures denotes the same or similar features.

### DETAILED DESCRIPTION OF THE INVENTION

For purposes of describing the invention, reference now will be made in detail to embodiments and aspects of the invention, one or more examples of which are illustrated in the drawings. Each example is provided by way of explanation of the invention, not limitation of the invention. In fact, from the teachings disclosed herein, it will be apparent to those skilled in the art that various modifications and variations can be made in the present invention without departing from the scope of the invention as defined by the appended claims. For instance, features illustrated or described as part of one embodiment, can be used with another embodiment to yield a still further embodiment. Thus, it is intended that the present invention covers such modifications and variations as come within the scope of the appended claims.

As used herein, the following definitions apply.

Axial direction A refers to a direction parallel to an axis about which a referenced exemplary wheel or tire rotates during use.

Radial direction R refers to a direction perpendicular to axial direction A with radially-outer or radially outward referring to a general direction away from axial direction A, and radially-inner or radially inward referring to a general direction towards axial direction A.

Circumferential direction C refers to a direction defined by defined by the circumference of the wheel or tire, or the direction of rotation the wheel or tire about an axis.

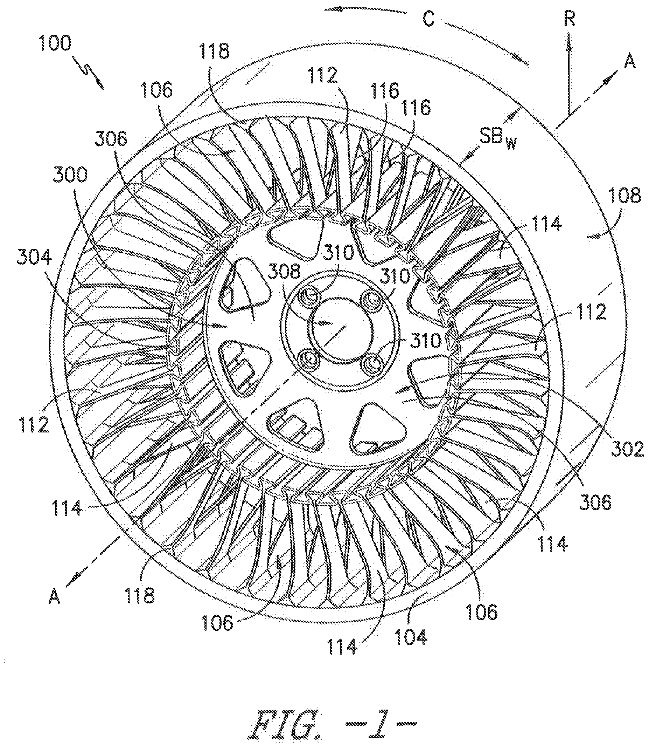

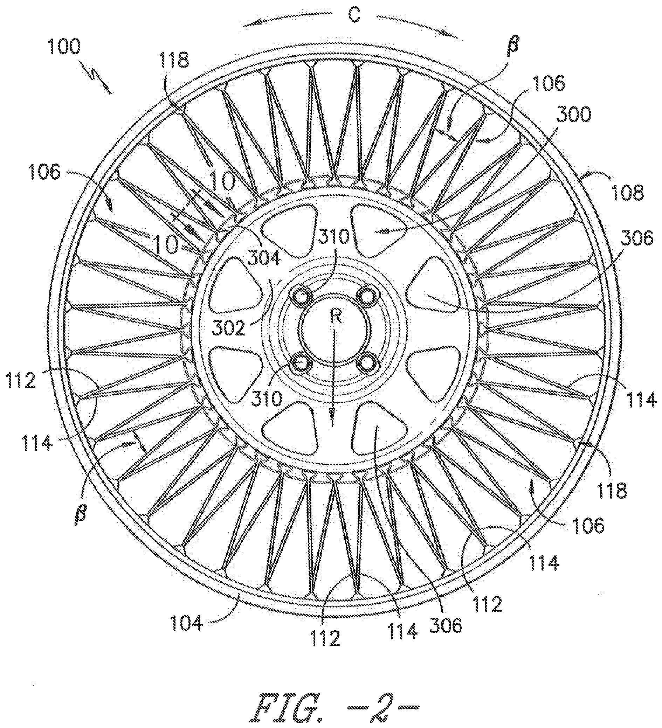

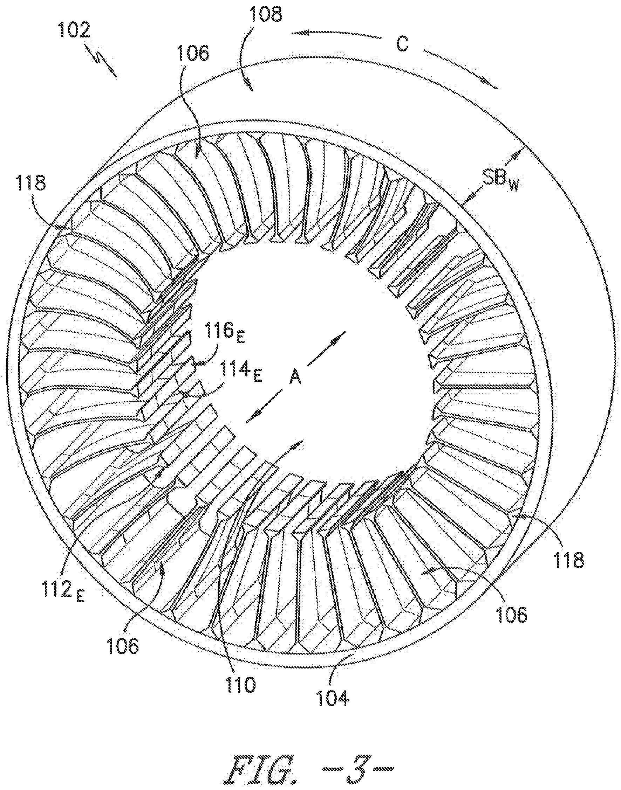

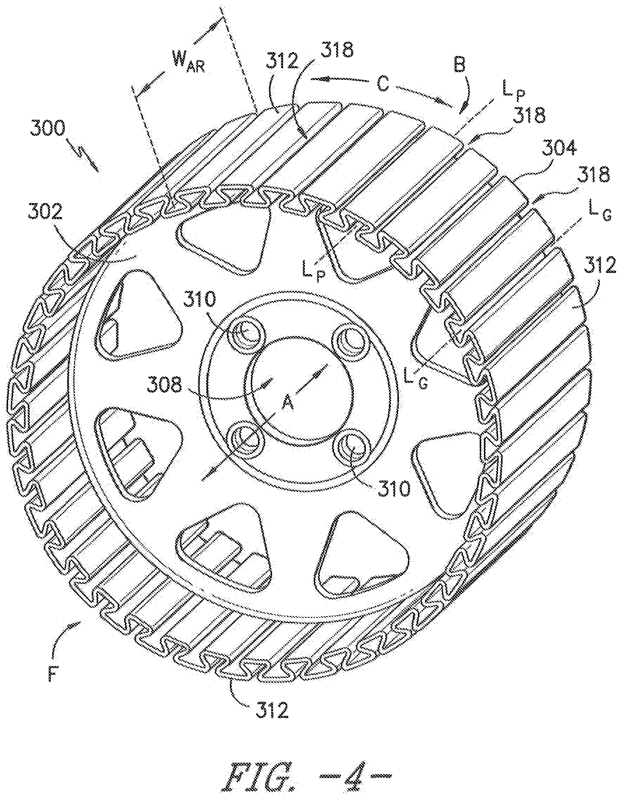

FIGS. 1 and 2 illustrate an exemplary embodiment of a non-pneumatic wheel 100 of the present invention. Wheel 100 includes a non-pneumatic tire 102 supported on a hub 300, which includes an annular receiver 304 with is connected with a central portion 302. FIG. 3 depicts non-pneumatic tire 102 without hub 300. FIG. 4 depicts annular receiver 304 of hub 300 with central portion 302 in place.

Referring now to FIGS. 1, 2, and 3, non-pneumatic tire 102 includes an annular shear band 104 that extends circumferentially around wheel 100 and has an axial width SB_{W∘} A plurality of spokes 106 are connected with shear band 102, connected with annular receiver 304 of hub 300, and spaced apart along circumferential direction C as will be further described.

Central portion 302 of hub 300 is configured for supporting wheel 100 on a vehicle. In this exemplary embodiment, hub 300 includes a plurality of spokes or arms 306 extending radially outward from a centroid 308 (FIG. 1) or from the axis of rotation to annular receiver 304. A plurality of openings 310 allow for insertion of fasteners to secure hub 300 (and thereby non-pneumatic wheel 100) to a vehicle. Hub 300 may be e.g., welded to annular receiver 304, formed integrally therewith, or attached using fasteners extending between hub 300 and annular receiver 304. The appearance and features of hub 300, and particularly central portion 302, are provided by way of example only and other configurations may be used as well.

Annular shear band 104 may include one or more reinforcing bands, reinforcing plies, shear layers, and other components (not shown). For example, shear band 104 may be constructed with a radially-inner reinforcing band, a radially-outer reinforcing band, and a shear layer positioned therebetween. The shear layer may be constructed e.g. of an elastomeric material such as e.g., natural and synthetic rubbers, polyurethanes, foamed rubbers and polyurethanes, segmented copolyesters, and block co-polymers of nylon. The reinforcing bands may include reinforcements constructed from e.g., essentially inextensible cord reinforcements embedded in an elastomeric coating. Such reinforcements may include e.g., any of several materials suitable for use as tire belt reinforcements in conventional tires such as cords of steel, composites of glass and resin such as e.g., fiberglass reinforced plastics, and other materials having a high modulus in tension and compression. In still another example, shear band 104 includes reinforcing plies, with each ply including cables that extend substantially along the circumferential direction C and may also be wrapped about axial direction A.

Shear band 102 provides a stiffness that allows spokes 106 to support hub 300 in tension during use of wheel 100 on a vehicle. As wheel 100 rolls across the surface of the ground, hub 300 "hangs" from shear band 102 through a portion of the plurality of spokes 106 that are in tension near the top of wheel 100 opposite the ground contacting portion of shear band 102. The portion of spokes 106 in tension changes as wheel 100 rolls and different spokes move into position opposite the ground contacting portion of shear band 102. At the same time, shear band 102 provides a resiliency or compliance over the ground surface that provides for a smoother, more comfortable ride.

Shear band 102 is depicted in FIGS. 1, 2, and 3, as having a smooth, radially-outer surface 108. However, outer surface 108 may be provided with a tread having e.g., grooves, ribs, blocks, or other features for enhancing traction performance. The tread can be molded directly into outer surface 108 or may be provided as a tread portion wrapped around wheel 100 and attached thereto. Other configurations may be used as well.

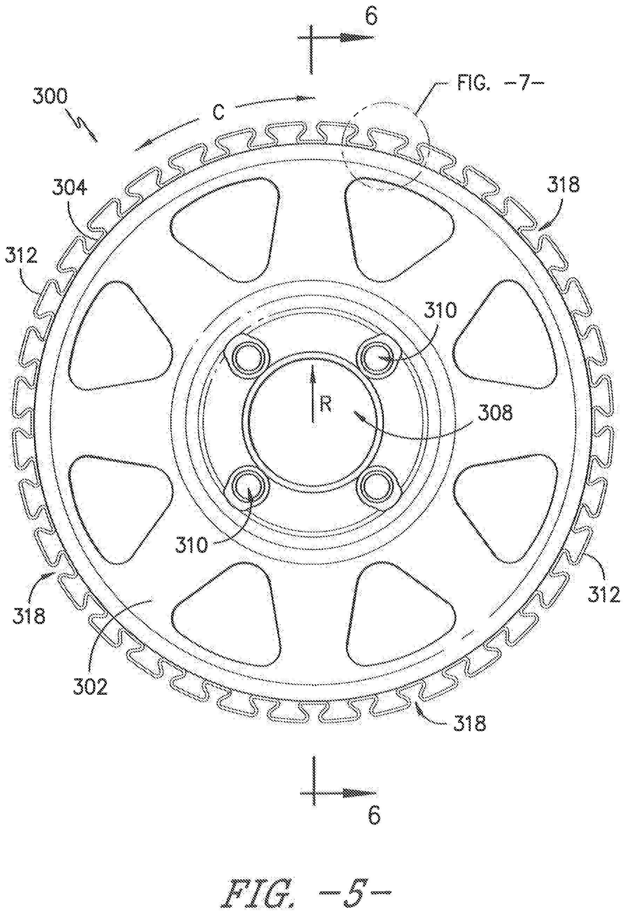

Referring now to FIGS. 4, 5, and 6, annular receiver 304 includes a plurality of grooves 318 spaced apart from each other along circumferential direction C. Each groove 318 defines a longitudinal axis L_{G} extending parallel to axial direction A. Each groove 318 is positioned between a pair of projections 312, which each have a longitudinal axis L_{P} extending parallel to axial direction A. Projections 312 are spaced apart from each other along circumferential direction C by grooves 318, and projections 312 and their spacing from each other define the shape and width of grooves 318.

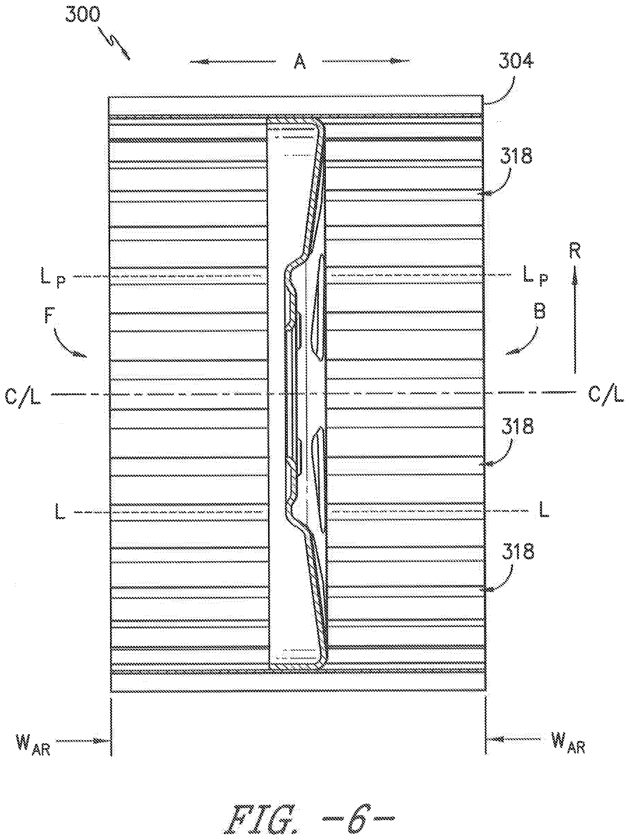

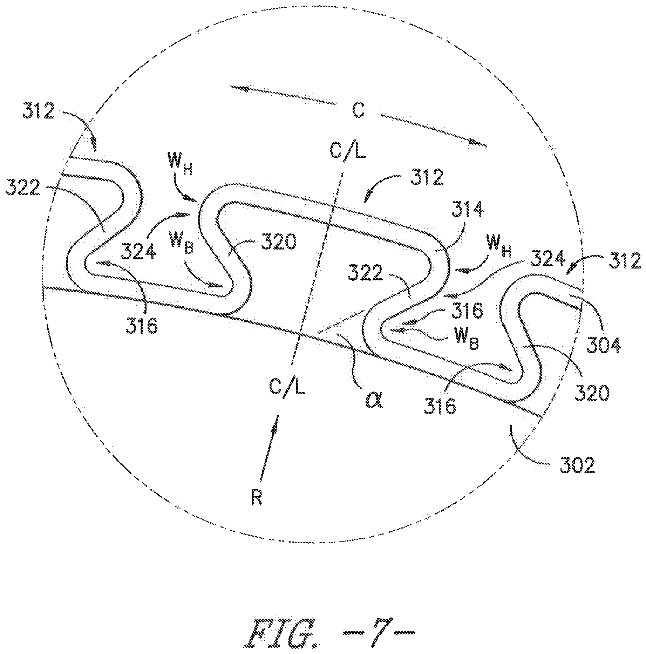

As shown in FIG. 7, for this exemplary embodiment, each projection 312 includes a head 314 positioned radially outward of a base 316. Head 314 has a width W_{H} (FIG. 6) along circumferential direction C that is wider that a width W_{B} along circumferential direction C of base 316. For this exemplary embodiment, width W_{H} and width W_{B} remain constant along axial direction A for the entire axial width W_{AR} of annular receiver 304. Such gives projections 312 and grooves 318 a continuous and uninterrupted profile along axial direction A between opposing sides F and B of annular receiver 304. In addition, each head 314 is located at the same radial distance from the axis of rotation, or centroid 308, of hub 300.

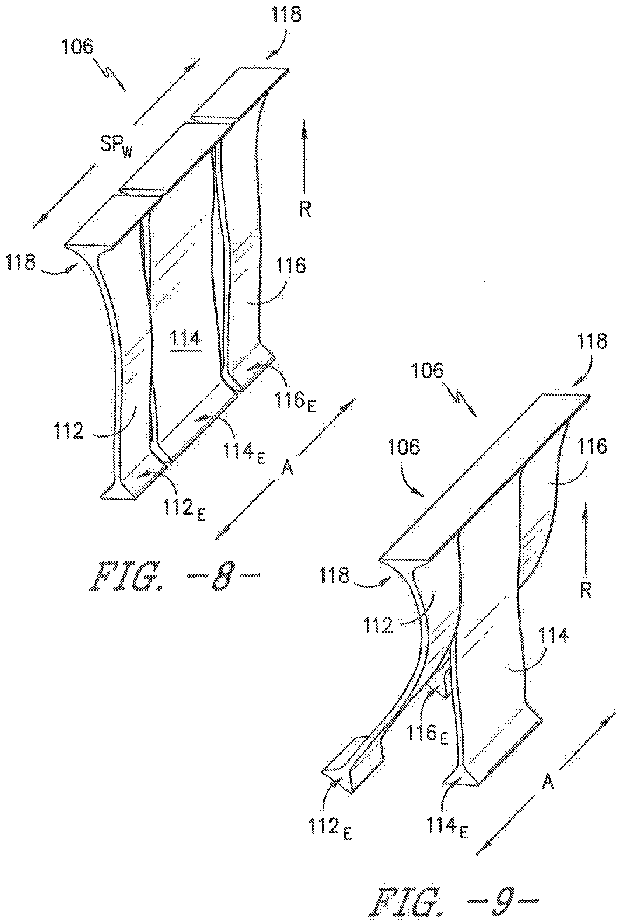

Each projection 312 includes a stem 324 extending between base 316 and head 314 along radial direction R. Stem 324 is formed by a pair of sides 320, 322 that are opposed to each other along circumferential direction C. Each side 320 and 322 forms an acute angle α, which is in the range of 30 degrees to 60 degrees for this exemplary embodiment. Each projection 312 defines a centerline C/L that is parallel to radial direction R. Each projection 312 is symmetrical about its respective centerline C/L. Viewed along axial direction A as depicted in FIG. 7, sides 320 and 322 are each linear along the direction between base 316 and stem 324. The cross-sectional shape of each groove 318 is configured for complementary receipt of the radially-inner ends 112E, 114E, and 116E (FIGS. 8 and 9) of spokes 106 as will be further described herein.

In one exemplary embodiment, annular receiver 304 is constructed from a single, continuous sheet of metal having axial width W_{AR}. Such sheet may be bent and/or folded to form projections 312 and grooves 318 along circumferential direction. Ends of the sheet are then welded together to create the circular shape of annular receiver 304. Central portion 302 can then be inserted into the interior of annular receiver 304 and welded thereto (FIG. 6). Other methods of construction may be used as well.

As shown in FIGS. 1, 2, 8, and 9, each spoke 106 includes a radially-outer end 118 that is connected with annular shear band 104. Radially-outer end 118 may be attached directly to shear band 104 or indirectly through a ring or feature connected to shear band 104. Spoke 106 may be one continuous piece along radially-outer end 118 as shown in FIG. 9 or may be separated into three portions as shown in FIG. 8.

In one exemplary embodiment, spoke 106 may include a plurality of reinforcement elements (not shown) provided as inextensible cords extending adjacent and parallel to each other along radial direction R or at other angles to radial direction R. For one exemplary embodiment, as used herein, "inextensible" means the material has an elongation at break of 12 percent or less as measured at 23°C according to ASTM 885. By way of example, such inextensible cords may be constructed from nylon, steel, combinations thereof, and other materials as well. Such cord may be positioned across the entire axial width SP_{W} (FIG. 8) of spoke 106 or, alternatively, may be positioned across only a portion of width SP_{W}. Such cords may be encased or embedded within one or layers of e.g., polymeric materials such as rubber forming spoke 106. Additional examples of spokes as may be used with the present invention are described in e.g. PCT International Application No. PCT/IB2015/058420, commonly owned by the assignees of the present invention.

Referring to FIGS. 8 and 9, for this exemplary embodiment each spoke 106 has a central spoke portion 114 positioned along axial direction A between its pair of corresponding outer spoke portions 112 and 116, which are opposed to each other along axial direction A. Each spoke portion has a respective radially-inner end 112_{E}, 114_{E}, and 116_{E} configured for complementary receipt into grooves 318 of annular receiver 304 Furthermore, radially-inner ends 112_{E}, 114_{E}, and 116_{E} are discrete or separate and may be moved independently of each other. Thus, as shown by way of example in FIG. 9, central portion 114 is shown extending along radial direction R while its associated or corresponding outer portions 112 and 116 may be folded or bent away from radial direction R.

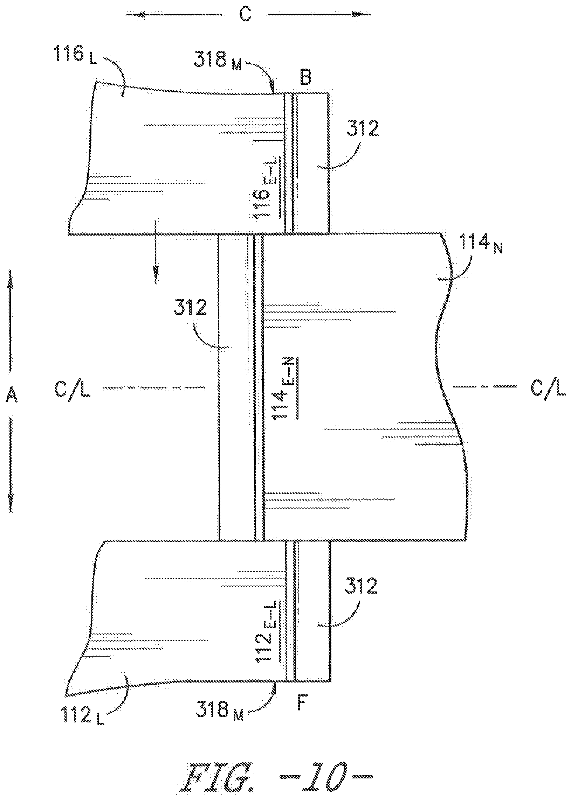

Referring back to FIGS. 1 and 2, which depicts tire 102 assembled with hub 300, central spoke portion 114 of each spoke 106 is not connected into the same groove 318 as its corresponding outer portions 112 and 116. Instead, referring now to FIG. 10, for a given spoke 106_{N}, radially-inner end 114_{E-N} is positioned within groove 318_{M}. The radially-inner ends 112_{N} and 116_{N} (not shown) of spoke 106_{N} are positioned within another groove 318_{N} (not shown) that is circumferentially adjacent to groove 318_{M} along annular receiver 104. Radially-inner ends 112_{L} and 116_{L} from another spoke 106_{L} (circumferentially adjacent to spoke 106_{N}) are also positioned in groove 318_{M}.

Thus, as shown in FIG. 10, moving along axial direction A of groove 318_{M} from front F to back B, such groove 318_{M} receives radially-inner end 112_{L} of a first spoke 106_{L}, radially-inner end 114_{N} of a second spoke 106_{N} that is circumferentially adjacent to first spoke 106_{L} along tire 102, and then radially-inner end 116_{L} of first poke 106_{L}.

As such, as shown in FIGS 1 and 2, central spoke portions 114 form an angle β with outer spoke portions 112 and 116 when wheel 100 is assembled. For this exemplary embodiment, angle β is in the range of 5 degrees ≤ β ≤ 15 degrees or, in still another embodiment, angle β is 10 degrees.

## Claims

1. A hub (300) for a non-pneumatic wheel (100) having a plurality of spokes (106), the hub defining axial, radial, and circumferential directions, the hub comprising:
a central portion (302) configured for supporting the wheel on a vehicle;
an annular receiver (304) supported on the central portion and extending circumferentially around the central portion, the annular receiver comprising
a plurality of projections (312) spaced apart from each other along the
circumferential direction, each projection having a longitudinal axis extending along the axial direction; and
a plurality of grooves (318) spaced apart from each other along the circumferential direction, each groove positioned between a pair of the plurality of projections, each groove having a longitudinal axis extending along the axial direction, each groove configured for the receipt of at least one radially-inner end (112E, 114E, 116E) of one or more of spokes,
**characterized in that**
the annular receiver comprises a single sheet of metal extending about the circumferential direction and forming the plurality of grooves and the plurality of projections.

2. The hub for a non-pneumatic wheel as in claim 1, wherein each projection comprises a head (314) positioned radially-outward of a base (316), wherein the head has a width along the circumferential direction that is wider than a width along the circumferential direction of the base.

3. The hub for a non-pneumatic wheel as in claim 1, wherein a stem (324) of each projection comprises a pair of sides (320, 322) opposed to each other along the circumferential direction with each side extending from the base to the head of the projection.

4. The hub for a non-pneumatic wheel as in claim 1, wherein each side forms an angle in the range of 30 degrees to 60 degrees from the radial direction.

5. The hub for a non-pneumatic wheel as in claim 1, wherein each projection defines a centerline parallel to the radial direction, and wherein each projection is symmetrical about its centerline.

6. The hub for a non-pneumatic wheel as in claim 1, wherein the hub (300) has a pair of opposing sides (F, B) separated from each other along the axial direction, and wherein each projection maintains a continuous profile along the axial direction between the opposing sides.

7. The hub for a non-pneumatic wheel as in claim 5, wherein each groove maintains a continuous profile along the axial direction between the opposing sides.

8. The hub for a non-pneumatic wheel as in claim 1, wherein the spokes each have at least one radially inner end (112E, 114E, 116E), and wherein each groove has a shape along the axial direction that is configured for complementary receipt of the radially inner end of one or more of the spokes.

9. The hub for a non-pneumatic wheel as in claim 1, wherein the annular receiver is rolled to form the plurality of grooves and the plurality of projections.

10. The hub for a non-pneumatic wheel as in claim 1, wherein the annular receiver is attached to the central portion.

11. The hub for a non-pneumatic wheel as in claim 1, wherein the longitudinal axis of each projection is parallel to the axial direction.

12. The hub for a non-pneumatic wheel as in claim 1, wherein the longitudinal axes of the projections are parallel to one another.

13. The hub for a non-pneumatic wheel as in claim 1, wherein the central portion defined a centroid (308) and further comprises a plurality of arms (306) extending radially outward from the centroid to the receiver.

14. A non-pneumatic wheel comprising the hub of claim 1.

## Patentansprüche

1. Nabe (300) für ein nicht-pneumatisches Rad (100) mit einer Vielzahl von Speichen (106), wobei die Nabe axiale, radiale und Umfangsrichtungen definiert, wobei die Nabe umfasst:
einen zentralen Abschnitt (302), der zum Tragen des Rades an einem Fahrzeug konfiguriert ist;
eine ringförmige Aufnahme (304), die auf dem zentralen Abschnitt gelagert ist und sich in Umfangsrichtung um den zentralen Abschnitt erstreckt, wobei die ringförmige Aufnahme eine Vielzahl von Vorsprüngen (312) umfasst, die entlang der Umfangsrichtung voneinander Abstand haben, wobei jeder Vorsprung eine Längsachse hat, die sich entlang der axialen Richtung erstreckt; und
eine Vielzahl von Nuten (318), die entlang der Umfangsrichtung voneinander getrennt sind, wobei jede Nut zwischen einem Paar der Vielzahl von Vorsprüngen angeordnet ist, wobei jede Nut eine Längsachse aufweist, die sich entlang der axialen Richtung erstreckt, wobei jede Nut für die Aufnahme mindestens eines radial inneren Endes (112E, 114E, 116E) von einer oder mehreren Speichen konfiguriert ist,
**dadurch gekennzeichnet, dass**
die ringförmige Aufnahme aus einem einzigen Metallblech besteht, das sich um die Umfangsrichtung herum erstreckt und die Vielzahl von Rillen und die Vielzahl von Vorsprüngen bildet.

2. Nabe für ein nicht-pneumatisches Rad nach Anspruch 1, wobei jeder Vorsprung einen Kopf (314) umfasst, der radial außerhalb einer Basis (316) positioniert ist, wobei der Kopf eine Breite entlang der Umfangsrichtung aufweist, die breiter ist als eine Breite entlang der Umfangsrichtung der Basis.

3. Nabe für ein nicht-pneumatisches Rad nach Anspruch 1, wobei ein Schaft (324) jedes Vorsprungs ein Paar von Seiten (320, 322) umfasst, die einander entlang der Umfangsrichtung gegenüberliegen, wobei sich jede Seite von der Basis zum Kopf des Vorsprungs erstreckt.

4. Nabe für ein nicht-pneumatisches Rad nach Anspruch 1, wobei jede Seite einen Winkel im Bereich von 30 Grad bis 60 Grad zur radialen Richtung bildet.

5. Nabe für ein nicht-pneumatisches Rad nach Anspruch 1, wobei jeder Vorsprung eine zur radialen Richtung parallele Mittellinie definiert und wobei jeder Vorsprung um seine Mittellinie symmetrisch ist.

6. Nabe für ein nicht-pneumatisches Rad nach Anspruch 1, wobei die Nabe (300) ein Paar gegenüberliegender Seiten (F, B) aufweist, die entlang der axialen Richtung voneinander getrennt sind, und wobei jeder Vorsprung ein kontinuierliches Profil entlang der axialen Richtung zwischen den gegenüberliegenden Seiten beibehält.

7. Nabe für ein nicht-pneumatisches Rad nach Anspruch 5, wobei jede Rille ein kontinuierliches Profil entlang der axialen Richtung zwischen den gegenüberliegenden Seiten beibehält.

8. Nabe für ein nicht-pneumatisches Rad nach Anspruch 1, wobei die Speichen jeweils mindestens ein radial inneres Ende (112E, 114E, 116E) haben und wobei jede Nut eine Form entlang der axialen Richtung hat, die zur komplementären Aufnahme des radial inneren Endes einer oder mehrerer der Speichen konfiguriert ist.

9. Nabe für ein nicht-pneumatisches Rad nach Anspruch 1, wobei die ringförmige Aufnahme gewalzt ist, um die Vielzahl von Rillen und die Vielzahl von Vorsprüngen zu bilden.

10. Nabe für ein nicht-pneumatisches Rad nach Anspruch 1, wobei die ringförmige Aufnahme am zentralen Teil befestigt ist.

11. Nabe für ein nicht-pneumatisches Rad nach Anspruch 1, wobei die Längsachse jedes Vorsprungs parallel zur axialen Richtung verläuft.

12. Nabe für ein nicht-pneumatisches Rad nach Anspruch 1, wobei die Längsachsen der Vorsprünge parallel zueinander sind.

13. Nabe für ein nicht-pneumatisches Rad nach Anspruch 1, wobei der zentrale Teil einen Schwerpunkt (308) definiert und ferner eine Vielzahl von Armen (306) umfasst, die sich vom Schwerpunkt radial nach außen zur Aufnahme erstrecken.

14. Nicht-pneumatisches Rad mit der Nabe nach Anspruch 1.

## Revendications

1. Moyeu (300) pour une roue non pneumatique (100) présentant une pluralité de rayons (106), le moyeu définissant des directions axiale, radiale et circonférentielle, le moyeu comprenant :
une partie centrale (302) configurée pour supporter la roue sur un véhicule ;
un récepteur annulaire (304) supporté sur la partie centrale et s'étendant circonférentiellement autour de la partie centrale, le récepteur annulaire comprenant une pluralité de saillies (312) espacées les unes des autres le long de la direction circonférentielle, chaque saillie présentant un axe longitudinal s'étendant le long de la direction axiale ; et
une pluralité de rainures (318) espacées les unes des autres le long de la direction circonférentielle, chaque rainure étant positionnée entre une paire de la pluralité de saillies, chaque rainure présentant un axe longitudinal s'étendant le long de la direction axiale, chaque rainure étant configurée pour la réception d'au moins une extrémité radialement intérieure (112E, 114E, 116E) d'un ou plusieurs rayons,
**caractérisé en ce que**
le récepteur annulaire comprend une feuille unique de métal s'étendant autour de la direction circonférentielle et formant la pluralité de rainures et la pluralité de saillies.

2. Moyeu pour une roue non pneumatique selon la revendication 1, dans lequel chaque saillie comprend une tête (314) positionnée radialement vers l'extérieur d'une base (316), dans lequel la tête présente une largeur le long de la direction circonférentielle qui est plus grande qu'une largeur le long, de la direction circonférentielle de la base.

3. Moyeu pour une roue non pneumatique selon la revendication 1, dans lequel une tige (324) de chaque saillie comprend une paire de côtés (320, 322) opposés l'un à l'autre le long de la direction circonférentielle avec chaque côté s'étendant de la base à la tête de la saillie.

4. Moyeu pour une roue non pneumatique selon la revendication 1, dans lequel chaque côté forme un angle dans la plage de 30 degrés à 60 degrés par rapport à la direction radiale.

5. Moyeu pour une roue non pneumatique selon la revendication 1, dans lequel chaque saillie définit une ligne médiane parallèle à la direction radiale, et dans lequel chaque saillie est symétrique par rapport à sa ligne médiane.

6. Moyeu pour une roue non pneumatique selon la revendication 1, dans lequel le moyeu (300) présente une paire de côtés opposés (F, B) séparés l'un de l'autre le long de la direction axiale, et dans lequel chaque saillie maintient un profil continu le long de la direction axiale entre les côtés opposés.

7. Moyeu pour une roue non pneumatique selon la revendication 5, dans lequel chaque rainure maintient un profil continu le long de la direction axiale entre les côtés opposés.

8. Moyeu pour une roue non pneumatique selon la revendication 1, dans lequel les rayons présentent chacun au moins une extrémité radialement intérieure (112E, 114E, 116E), et dans lequel chaque rainure présente une forme le long de la direction axiale qui est configurée pour une réception complémentaire de l'extrémité radialement intérieure d'un ou plusieurs des rayons.

9. Moyeu pour une roue non pneumatique selon la revendication 1, dans lequel le récepteur annulaire est enroulé pour former la pluralité de rainures et la pluralité de saillies.

10. Moyeu pour une roue non pneumatique selon la revendication 1, dans lequel le récepteur annulaire est fixé à la partie centrale.

11. Moyeu pour une roue non pneumatique selon la revendication 1, dans lequel l'axe longitudinal de chaque saillie est parallèle à la direction axiale.

12. Moyeu pour une roue non pneumatique selon la revendication 1, dans lequel les axes longitudinaux des saillies sont parallèles les uns aux autres.

13. Moyeu pour une roue non pneumatique selon la revendication 1, dans lequel la partie centrale définit un centroïde (308) et comprend en outre une pluralité de bras (306) s'étendant radialement vers l'extérieur du centroïde au récepteur.

14. Roue non pneumatique comprenant le moyeu selon la revendication 1.
